# EUROPÄISCHE PATENTSCHRIFT

(11) **EP 2 504 163 B1**
(45) Veröffentlichungstag und Bekanntmachung des Hinweises auf die Patenterteilung: **10.12.2014**
(21) Anmeldenummer: 10781874.2
(22) Anmeldetag: 17.11.2010
(51) Int. Cl.: B32B 15/00, B62D 29/00

(54) **FAHRZEUGHAUBE, VERBUNDWERKSTOFF UND VERFAHREN ZUR HERSTELLUNG EINER KRAFTFAHRZEUGHAUBE ODER EINES VERBUNDWERKSTOFFS**
VEHICLE HOOD, COMPOSITE MATERIAL AND METHOD FOR PRODUCING A MOTOR VEHICLE HOOD OR A COMPOSITE MATERIAL
CAPOT DE VÉHICULE, MATÉRIAU COMPOSITE, ET PROCÉDÉ DE FABRICATION D'UN CAPOT DE VÉHICULE OU D'UN MATÉRIAU COMPOSITE

(30) Priorität: 27.11.2009 DE 102009047252
(43) Veröffentlichungstag der Anmeldung: 03.10.2012
(73) Patentinhaber: Grein TEC GmbH, 8020 Graz (AT)
(72) Erfinder: WELLNITZ, Jörg, 85137 Walting (DE)
(74) Vertreter: Patentanwaltskanzlei WILHELM & BECK
(86) Internationale Anmeldenummer: PCT/EP2010/067642
(87) Internationale Veröffentlichungsnummer: WO 2011/064125

(56) Entgegenhaltungen:
- DE-U1-202007 002 426

## Beschreibung

Die Erfindung betrifft eine Kraftfahrzeughaube, insbesondere eine Motor- oder Kofferraumhaube für ein Personenkraftfahrzeug, sowie einen Verbundwerkstoff, insbesondere für Mantelteile im Kraftfahrzeug- oder Flugzeugbau. Ferner betrifft die Erfindung ein Verfahren zur Herstellung einer Kraftfahrzeughaube oder eines Verbundwerkstoffs.

Verbundwerkstoffe bzw. Verbundmaterialien aus jeweils einer oder mehreren Metall- und Kunststoffschichten haben mittlerweile eine breite Anwendung gefunden, wobei meist sandwichartige Strukturen (Schichtverbundwerkstoffe bzw. Laminate) in Mantel- oder Karosserieteilen eingesetzt werden. Beispiele hierfür sind Kunststoff/Metall-Verbundwerkstoffe, die in den letzten Jahren vor allem von Flugzeugherstellern als Konstruktionsmaterial für Flugzeugrümpfe, Tragflächen oder Leitwerke verwendet werden. Verbundwerkstoffe zeichnen sich in der Regel dadurch aus, dass unterschiedliche Eigenschaften verschiedener Werkstoffe kombiniert werden können, wodurch es möglich wird, konträre Ziele zu vereinen. Beispielsweise weisen moderne Verbundwerkstoffe eine hohe Zugfestigkeit, Biegesteifigkeit und Stabilität auf, während sie gleichzeitig auch hinsichtlich des Gewichts vorteilhaft gegenüber anderen Materialien sind.

Die Komponenten eines Verbundwerkstoffs können dabei selbst wieder Verbundwerkstoffe sein. Verbundwerkstoffe können ferner Teilchen- und Fasern aufweisen, die in eine andere Komponente des Verbundwerkstoffs, eine sogenannte Matrix, eingebettet sind. In solchen Verbundwerkstoffen können die Fasern in eine oder mehrere bestimmte Richtungen verlaufen bzw. Vorzugsrichtungen haben. Verbundwerkstoffe können schichtweise hergestellt werden, sind dadurch aber noch keine Schichtverbundwerkstoffe, wenn die aufeinander folgenden Schichten gleichartig sind. Der Spezialfall von drei Schichten, wovon zwei identische Außenschichten sind, wird als Sandwichverbund bezeichnet. Bei Durchdringungs-Verbundwerkstoffen bilden die einzelnen Komponenten für sich jeweils zusammenhängende Materialien. Als Laminat bezeichnet man insbesondere einen Werkstoff, der aus zwei oder mehreren flächig miteinander verklebten Schichten besteht, wobei diese Schichten aus gleichen oder unterschiedlichen Materialien bestehen können.

Im Kraftfahrzeugbereich sind die Hersteller und Zulieferer immer bestrebt, mit verbesserten Materialien konkurrenzfähigere Kraftfahrzeuge zu bauen bzw. konkurrenzfähigere Produkte anzubieten. Dies betrifft z. B. Werkstoffe, die leichter sind, eine verbesserte Temperaturdämmung oder auch bessere Akustikwerte besitzen. Ferner gehen die Bestrebungen bei der Entwicklung dahin, die Passanten- und/oder Insassensicherheit immer mehr zu erhöhen. So haben z. B. herkömmliche Fahrzeughauben eine Mehrzahl von Nachteilen. Sie sind meist aus Stahlblech gefertigt und somit vergleichsweise schwer. Fahrzeughauben gemäß dem Strand der Technik besitzen vergleichsweise schlechte HIC-Werte (Head Injury Criterion, d. h. Kopf-Verletzungs-Faktor bzw. Kopfbelastungswert) und weisen selbst, d. h. ohne Dämmmaterial, eine nur geringe Temperaturdämmung auf. Um ferner eine gute Akustikverschalung bei einer Motorhaube zu erreichen, sind aufwändige Zusatzmaßnahmen mittels Dämmmaterial erforderlich, was wiederum den Bauraum im Motorraum einschränkt.

Es ist eine Aufgabe der vorliegenden Erfindung eine verbesserte Fahrzeughaube, wie z. B. eine Motor- oder Kofferraumhaube für ein Personenkraftfahrzeug, aus einem verbesserten Werkstoff anzugeben. Hierbei soll die Fahrzeughaube gute HIC-Werte besitzen, verbesserte Werte bei der Temperaturdämmung besitzen und eine verbesserte Akustikverschalung zur Verfügung stellen. Ferner ist es eine Aufgabe der Erfindung einen Werkstoff, insbesondere für Mantelteile im Kraftfahrzeug- oder Flugzeugbau anzugeben, der verbesserte Eigenschaften besitzt. Hierbei sollte der Werkstoff möglichst leicht sein und eine gute mechanische Belastbarkeit in Bezug auf Zugfestigkeit, thermische Belastbarkeit, Materialermüdung, Biegesteifigkeit und/oder Kerbschlagzähigkeit besitzen. Des Weiteren ist es eine Aufgabe der Erfindung ein Verfahren zur Herstellung einer solchen Kraftfahrzeughaube oder eines solchen Werkstoffs anzugeben.

Die Aufgabe der Erfindung wird mittels einer Kraftfahrzeughaube, insbesondere einer Motor- oder Kofferraumhaube für ein Personenkraftfahrzeug, gemäß Anspruch 1; mittels eines Verbundwerkstoffs, insbesondere für Mantelteile im Kraftfahrzeug- oder Flugzeugbau, gemäß Anspruch 3; und durch ein Verfahren zur Herstellung einer Kraftfahrzeughaube oder eines Verbundwerkstoffs gemäß Anspruch 10 gelöst. Vorteilhafte Weiterbildungen der Erfindung ergeben sich aus den abhängigen Ansprüchen.

Die Aufgabe der Erfindung wird mittels einer Kraftfahrzeughaube gelöst, die wenigstens zwei Werkstoffschichten aufweist. Die erste Werkstoffschicht weist dabei ein Metall und die zweite Werkstoffschicht ein Gestein auf. Hierbei ist das Gestein bevorzugt ein Naturstein bzw. eine Natursteinlage, die bevorzugt aus einem natürlichen Gesteinsblock herausgearbeitet ist. Die jeweilige Werkstoffschicht, im Folgenden als Metall- bzw. Steinschicht bezeichnet, kann jedoch auch noch andere Materialien aufweisen, d. h. selbst wiederum ein Verbundwerkstoff bzw. ein Durchdringungs-Verbundwerkstoff sein. Darüber hinaus kann die Kraftfahrzeughaube noch eine oder eine Mehrzahl von anderen Werkstoffschichten besitzen.

Es ist jedoch bevorzugt, dass die Kraftfahrzeughaube als konstituierende Materialien - d. h. Materialien bzw. Werkstoffe, aus welchen die Kraftfahrzeughaube im Wesentlich aufgebaut ist und die ihr die wesentlichen mechanischen, thermischen und akustischen Eigenschaften verleiht - nur diese beiden Werkstoffschichten, also die Metallschicht und die Steinschicht, aufweist, die somit zueinander direkt benachbart und allenfalls durch eine gemeinsame Verbindungsschicht getrennt sind. Die Verbindungsschicht kann dabei eine Klebstoffschicht sein. Für den Fall das die Metallschicht und die Steinschicht mittels eines Ultraschall-Fügeverfahrens aneinander festgelegt sind, kann der dabei zwischen der Metallschicht und der Steinschicht entstehende Durchdringungs-Verbundwerkstoff als Verbindungsschicht betrachtet werden.

Die erfindungsgemäße Kraftfahrzeughaube zeichnet sich gegenüber dem Stand der Technik vor allem dadurch aus, dass sie eine exzellente Akustikverschalung zur Verfügung stellt, die das Fahrzeug leiser als vergleichbare Fahrzeuge mit einer herkömmlichen Motorhaube macht. Ferner besitzt die erfindungsgemäße Kraftfahrzeughaube, ein verbessertes Crashverhalten, bessere HIC-Werte und günstigere Werte bei der Temperaturdämmung als vergleichbare Kraftfahrzeughauben aus dem Stand der Technik. Im Vergleich mit Kraftfahrzeughauben aus Stahlblech kann erfindungsgemäß eine leichtere Kraftfahrzeughaube zur Verfügung gestellt werden.

Aufgrund der exzellenten Akustikverschalung können aufwändige akustische Dämmmaßnahmen im Bereich einer Motorhaube entfallen, wodurch das Kraftfahrzeug insgesamt kostengünstiger wird und auch mehr Bauraum im Motorbereich des Kraftfahrzeugs zur Verfügung steht. Des Weiteren besitzt die erfindungsgemäße Kraftfahrzeughaube eine gute mechanische Belastbarkeit in Bezug auf Zugfestigkeit, thermische Belastbarkeit, Materialermüdung und Biegesteifigkeit.

In bevorzugten Ausführungsformen der Erfindung weist die Steinschicht des Verbundwerkstoffs der Kraftfahrzeughaube an einer der Metallschicht gegenüberliegenden, großflächigen Seite eine Beschichtung, insbesondere eine Filmbeschichtung, auf. Die Filmbeschichtung ist insbesondere eine PET-Filmbeschichtung, die wiederum bevorzugt als eine aufgeschrumpfte PET-Folie ausgebildet ist. Die Metallschicht und die Steinschicht sind bevorzugt mittels eines Klebstoffs oder eines Ultraschall-Fügeverfahrens aneinander festgelegt. Als ein Klebstoff kommt insbesondere ein Acrylharz-, ein Epoxydharz- oder ein Hochtemperatur-Klebstoff in Frage. Weitere Merkmale der erfindungsgemäßen Kraftfahrzeughaube ergeben sich aus den folgenden Ausführungen zum erfindungsgemäßen Verbundwerkstoff; d. h. auch, dass der Verbundwerkstoff Merkmale der Kraftfahrzeughaube aufweisen kann.

Die Aufgabe der Erfindung wird ferner mittels eines Verbundwerkstoffs gelöst, der wenigstens zwei Werkstoffschichten besitzt. Die erste Werkstoffschicht weist dabei ein Metall und die zweite Werkstoffschicht ein Gestein auf, wobei eine jeweilige Werkstoffschicht im Folgenden auch als Metall- bzw. Steinschicht bezeichnet wird. Ferner weist eine große Seitenfläche der Steinschicht des erfindungsgemäßen Verbundwerkstoffs eine Beschichtung, insbesondere eine Filmbeschichtung auf. Es ist bevorzugt, dass diese drei Schichten direkt zueinander benachbart im Verbundwerkstoff angeordnet sind; d. h. die Steinschicht befindet sich zwischen der Metallschicht und der Beschichtung bzw. Filmbeschichtung.

Der erfindungsgemäße Verbundwerkstoff hat hervorragende akustische Dämpfungseigenschaften, wodurch er als akustisches Dämmmaterial prädestiniert ist. Zusätzlich zeichnen ihn seine guten Werte bei der Temperaturdämmung aus, sodass sich der Verbundwerkstoff z. B. für Gebäude eignet. Der Verbundwerkstoff ist einerseits vergleichsweise weich, z. B. in Bezug auf ein Stahlblech in derselben Verwendung, anderseits zäh und splittert nicht, was einen passiven Schutz von Passanten und einen aktiven Schutz von Insassen bei der Anwendung des Verbundwerkstoffs auf ein Fahrzeug in dessen Crashfall erhöht. Findet der Verbundwerkstoff im Straßenbau Anwendung so ist die passive Sicherheit aller Verkehrsteilnehmer erhöht. Ferner ist der Verbundwerkstoff im Sinne anderer Ziele, wie beispielsweise hinsichtlich des Gewichts, der Zugfestigkeit, der Biegesteifigkeit, der Kerbschlagzähigkeit und/oder auch einer Stabilität gegen flächige Belastungen im Vergleich mit Materialien aus dem Stand der Technik, insbesondere Metallblechen, optimiert. Des Weiteren besitzt der Verbundwerkstoff ein gute mechanische Belastbarkeit auch in Bezug auf thermische Belastung und Materialermüdung. Ein weiterer Vorteil der Verwendung von Gestein liegt in der guten, preisgünstigen und massenhaften Verfügbarkeit, gerade in Zeiten hoher Stahlpreise.

Es ist möglich, zusätzliche Schichten auch in einer anderen Reihenfolge innerhalb des erfindungsgemäßen Verbundwerkstoffs vorzusehen. D. h. der Verbundwerkstoff kann z. B. eine Mehrzahl von Metall- und/oder Steinschichten besitzen. Ferner können andere Schichten, wie eine Metallschaumschicht, vorzugsweise eine Aluminiumschaumschicht, eine Ringgeflechtschicht, vorzugsweise aus einem Kunststoff, und/oder eine Gewebeschicht vorgesehen sein. Des Weiteren ist es möglich, als jeweilige Außenschichten eine beschichtete Steinschicht vorzusehen. Durch diese Maßnahmen können die Eigenschaften des Verbundwerkstoffs gezielt beeinflusst und auf bestimmte Anwendungsfälle "zugeschnitten" werden.

Die Metallschicht kann Aluminium, Magnesium, Titan, Eisen oder Stahl aufweisen bzw. aus Legierungen dieser Metalle bestehen. Andere Metalle bzw. Metalllegierungen können natürlich angewendet werden. Die Steinschicht weist bevorzugt einen Magmatit, einen Sedimentit oder einen Metamorphit, insbesondere einen Gabbro, einen Granit, einen Quarzit oder ein Basaltgestein auf. Andere als die letztgenannten Gesteine sind erfindungemäß ebenfalls anwendbar, wobei ein feinkörniges Gestein, insbesondere ein feinkörniger Gabbro oder Granit bevorzugt ist. Darüber hinaus kann gemäß der Erfindung auch ein Kunststein angewendet werden.

In bevorzugten Ausführungsformen der Erfindung ist eine Schichtdicke der Metallschicht geringer als eine Schichtdicke der Steinschicht. Bevorzugt beträgt die Schichtdicke der Steinschicht ca. das 4,5- bis 5-fache, bevorzugt das 3,5- bis 4-fache und insbesondere das 2,5- bis 3-fache und insbesondere besonders bevorzugt das 1,5- bis 2-fache der Schichtdicke der Metallschicht. In Ausführungsformen der Erfindung kann in die Metallschicht eine Flüssigkeit eingesickert sein oder die Metallschicht ist eine getränkte Schicht, die bevorzugt als eine Sperrschicht gegen Flüssigkeiten ausgebildet ist.

Das erfindungsgemäße Verfahren zur Herstellung einer Kraftfahrzeughaube oder eines Verbundwerkstoffs umfasst im Wesentlichen zwei Schritte. Zunächst werden eine erste Werkstoffschicht und eine zweite Werkstoffschicht aneinander festgelegt. In einem zeitlich folgenden Schritt wird auf eine Seitenfläche einer Werkstoffschicht eine Beschichtung aufgebracht. Bevorzugt weist dabei die erste Werkstoffschicht wiederum ein Metall und die zweite Werkstoffschicht wiederum ein Gestein auf, wobei die Beschichtung bevorzugt nach dem ersten Schritt des erfindungemäßen Verfahrens auf die freie, große Seitenfläche der Steinschicht aufgebracht wird. Ferner kann das erfindungemäße Produkt dieses erfindungemäßen Verfahrens wie oben beschrieben (Kraftfahrzeughaube bzw. Verbundwerkstoff) ausgelegt sein.

Die Erfindung wird im Folgenden anhand von Ausführungsbeispielen unter Bezugnahme auf die beigefügte Zeichnung näher erläutert. In der schematischen Zeichnung zeigen:
- Fig. 1: eine zweiseitig abgeschnittene Querschnittsansicht durch eine erste Ausführungsform einer erfindungsgemäßen Kraftfahrzeughaube;
- Fig. 2: eine zweiseitig abgeschnittene Querschnittsansicht durch eine zweite Ausführungsform der erfindungsgemäßen Kraftfahrzeughaube;
- Fig. 3: eine zweiseitig abgeschnittene Querschnittsansicht durch eine dritte Ausführungsform der erfindungsgemäßen Kraftfahrzeughaube;
- Fig. 4: eine Querschnittsansicht durch eine erste Ausführungsform eines erfindungsgemäßen Verbundwerkstoffs;
- Fig. 5: eine Querschnittsansicht durch eine zweite Ausführungsform des erfindungsgemäßen Verbundwerkstoffs;
- Fig. 6: eine Ausführungsform eines beispielhaften Aufbaus eines Verbundwerkstoffs, der auf dem erfindungsgemäßen Verbundwerkstoff beruht; und
- Fig. 7: eine weitere Ausführungsform eines beispielhaften Aufbaus eines Verbundwerkstoffs, der auf dem erfindungsgemäßen Verbundwerkstoff beruht.

Die Erfindung - eine Kraftfahrzeughaube, ein Verbundwerkstoff und ein Herstellungsverfahren einer Kraftfahrzeughaube und eines Verbundwerkstoffs - wird im Folgenden in der Anwendung auf den Kraftfahrzeugbau, insbesondere den Karosseriebau, und den Flugzeugbau, zu welchem auch der Bau von Helikoptern und anderen Fluggeräten zählen soll, näher erläutert. Die Erfindung ist jedoch nicht auf solche Anwendungen beschränkt, sondern kann auch andere Anwendungen als die eben genannten haben. So ist die Erfindung z. B. im Straßenbau verwendbar oder kann als Material im Gebäudebau eingesetzt werden.

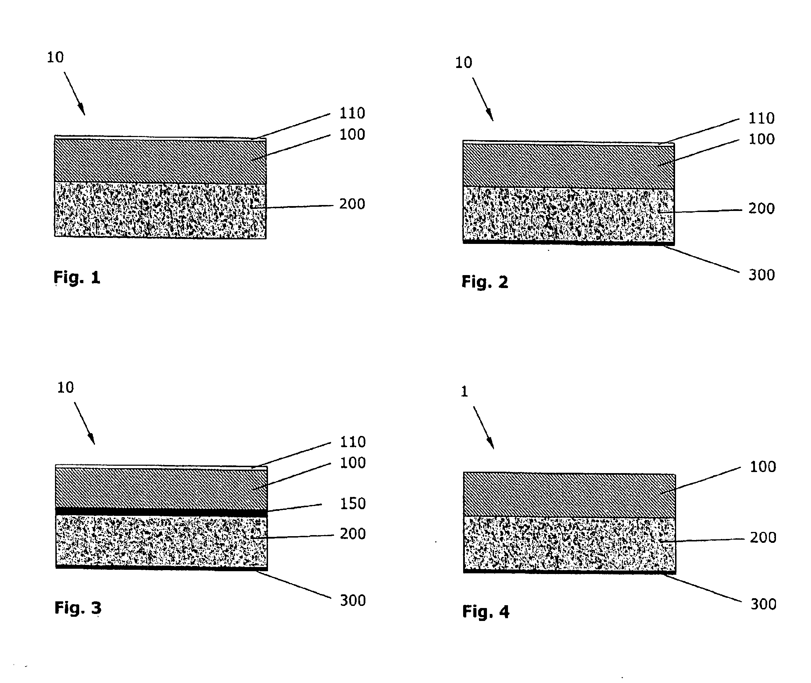

Fig. 1 zeigt einen Ausschnitt der ersten Ausführungsform der erfindungsgemäßen Kraftfahrzeughaube 10, die im Wesentlichen eine erste Werkstoffschicht 100 und eine zweite Werkstoffschicht 200 aufweist. Des Weiteren zeigt die Fig. 1 der zweiten Werkstoffschicht 200 gegenüberliegend an einer flächigen Seite der ersten Werkstoffschicht 100 eine Lackschicht 110; diese ist jedoch optional. Die Fig. 2 zeigt einen Ausschnitt der zweiten Ausführungsform, die zusätzlich zur ersten Ausführungsform eine Beschichtung 300 an der zweiten Werkstoffschicht 200 gegenüberliegend zur ersten Werkstoffschicht 100 besitzt. D. h. die zweite Werkstoffschicht 200 ist hierbei an ihren großen Seitenflächen zwischen der ersten Werkstoffschicht 100 und der Beschichtung 300 eingeschlossen.

Ferner sind die erste Werkstoffschicht 100 und die zweite Werkstoffschicht 200 aneinander flächig festgelegt, d. h. im Wesentlichen alle Oberflächenbereiche der ersten Werkstoffschicht 100 sind mit den betreffenden Oberflächenbereichen der zweiten Werkstoffschicht 200 fest verbunden. Dies kann z. B. durch ein Ultraschall-Fügeverfahren, wie z. B. einem Ultraschall-Schweißverfahren erfolgen, wobei sich zwischen den beiden Werkstoffschichten 100, 200 ein in den Fig. 1 und 2 nicht dargestellter Schweißbereich ausbildet, in welchem sich die beiden Werkstoffe gegenseitig durchdringen und so einen flächigen Halt der beiden Werkstoffschichten 100, 200 aneinander garantieren.

Statt durch ein Ultraschall-Fügeverfahren können die beiden Werkstoffschichten 100, 200 miteinander verklebt werden, was in der Fig. 3 mit der Verbindungsschicht 150 dargestellt ist, die die dritte Ausführungsform der erfindungsgemäßen Kraftfahrzeughaube 10 visualisiert. Ferner besitzt die Kraftfahrzeughaube 10 gemäß der dritten Ausführungsform die auch in Fig. 2 dargestellte Beschichtung 300 der zweiten Werkstoffschicht 200. Die ebenfalls flächig anhaftende Beschichtung 300 kann als eine Filmbeschichtung 300, insbesondere eine PET-Filmbeschichtung 300, ausgebildet sein, die bevorzugt eine aufgeschrumpfte PET-Folie 300 ist. Die Verbindungsschicht 150 der dritten Ausführungsform weist einen Klebstoff, bevorzugt einen Acrylharz-Klebstoff, wie z. B. SikaFast^{®} 5221, oder einen Epoxydharz-Klebstoff, auf.

Die erste Werkstoffschicht 100 weist gemäß der vorliegenden Erfindung ein Metall, z. B. Aluminium, Magnesium, Titan, Eisen, Stahl, Chrom, Wolfram, Vanadium, Molybdän oder Nickel auf. Ferner kann diese Schicht Kohlenstoff aufweisen. Die zweite Werkstoffschicht 200 weist gemäß der vorliegenden Erfindung ein Gestein, beispielsweise einen Magmatit, einen Sedimentit oder einen Metamorphit auf. Bevorzugt sind Magmatite, insbesondere Plutonite und Vulkanite, wie Basaltgesteine, Granite, Gabbros (Mikrogabbro), Quarzite und Feldspat. Extra genannt sei hier der "Nero Assoluto Zimbabwe", ein feinkörniger, schwarzer Gabbro (Norit). Jedoch können Quarz, Glimmer, Marmor, Speckstein und/oder Kalkstein und/oder Kombinationen davon ebenfalls angewendet werden.

Die erste Werkstoffschicht 100 kann aus einer Lage des Gesteins bestehen, die aus einem Block des Gesteins herausgearbeitet, beispielsweise geschnitten ist. Der Gesteinblock wird dabei in einem Steinbruch aus einem natürlichen Vorkommen des Gesteins gewonnen, d. h. abgebaut. Nach dem Schneiden kann die Schicht gedünnt werden, um eine erste Werkstoffschicht 100 mit gewünschter Dicke zu erhalten. Dies kann z. B. mittels Schleifen erfolgen. Aber auch künstlich hergestellte Gesteine können gemäß der Erfindung angewendet werden.

Eine Schichtdicke der ersten Werkstoffschicht 100 beträgt bevorzugt 0,2 bis 1,7 mm, bevorzugt 0,35 bis 1,5 mm, insbesondere 0,5 bis 1,2 mm, insbesondere bevorzugt 0,7 bis 1,2 mm und insbesondere besonders bevorzugt 1 mm; jeweils ±0,1 mm. Eine Schichtdicke der zweiten Werkstoffschicht 200 beträgt bevorzugt 0,3 bis 4,5 mm, bevorzugt 0,6 bis 4 mm, insbesondere 1 bis 3,5 mm, insbesondere bevorzugt 1,5 bis 3 mm und insbesondere besonders bevorzugt 2 bis 2,5 mm; jeweils ±0,3 mm. Abhängig von der Anwendung können die erste Werkstoffschicht 100 und/oder die zweite Werkstoffschicht 200 auch größere Dicken aufweisen. Eine Dicke der Verbindungsschicht 150 bzw. einer Ultraschallschweißnaht beträgt bevorzugt 0,02 bis 1 mm und insbesondere 0,1 bis 0,5 mm. Eine Dicke der Beschichtung beträgt bevorzugt 8 bis 120 µm, insbesondere 12 bis 50 µm.

Die oben genannten Materialbeispiele und -abmessungen für die erste Werkstoffschicht 100, die zweite Werkstoffschicht 200, die Verbindungsschicht 150 und die Beschichtung 300 sind an dieser Stelle stellvertretend für alle Ausführungsformen der vorliegenden Erfindung genannt. Ferner können die Merkmale der erfindungsgemäßen Kraftfahrzeughaube 10 auf den im Folgenden erläuterten erfindungsgemäßen Verbundwerkstoff 1 übertragen werden und umgekehrt, da die Kraftfahrzeughaube 10 aus dem Verbundwerkstoff 1 besteht bzw. sich der Verbundwerkstoff 1 aus der Kraftfahrzeughaube 10 ableitet.

Wesentliches Merkmal des Verbundwerkstoffs 1 - neben der Kombination von Metall mit Gestein - ist die Beschichtung 300, die in einem Belastungsfall das Aufbrechen der zweiten Werkstoffschicht 200 verhindert und so eine Integrität des Verbundwerkstoffs 1 sicherstellt, der dabei seine Eigenschaften beibehält. Im Belastungsfall verteilt sich eine punktuell oder flächig eingeleitete Kraft homogen in der Beschichtung 300, die dadurch mechanischen Belastungen gut standhalten kann. Der Verbundwerkstoff kann dabei als ein Schichtverbundwerkstoff, ein Sandwichverbund, ein Durchdringungs-Verbundwerkstoff oder als ein Laminat, also ein Steinlaminat, ausgebildet sein.

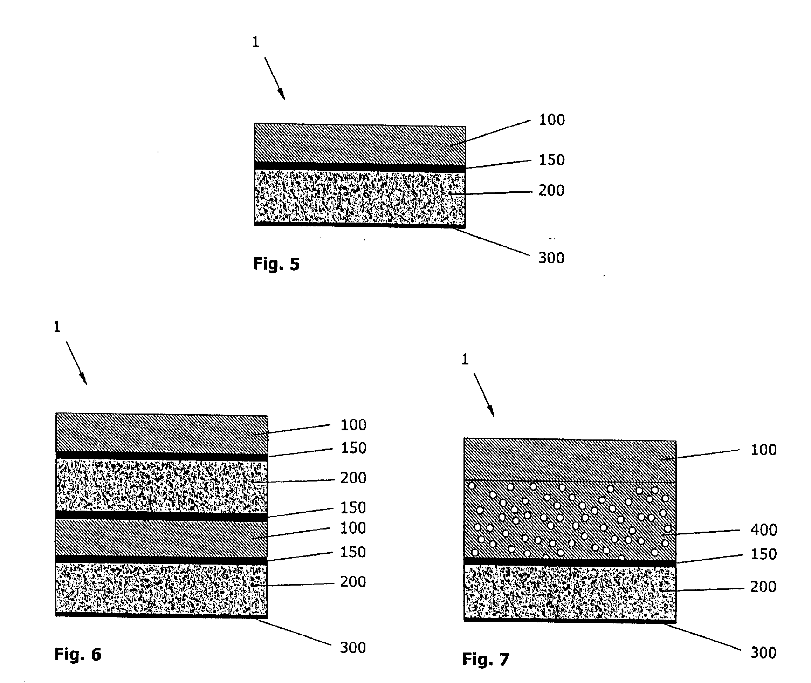

Die Fig. 4 und 5 zeigen jeweils einen Querschnitt einer ersten und einer zweiten Ausführungsform des erfindungsgemäßen Verbundwerkstoffs 1 in seiner Grundform. Hierbei weist der Verbundwerkstoff 1 eine ein Metall aufweisende, erste Werkstoffschicht 100, eine ein Gestein aufweisende, zweite Werkstoffschicht 200 und eine Beschichtung 300 auf, die sich an der zweiten Werkstoffschicht 200 diametral gegenüberliegend zur ersten Werkstoffschicht 100 befindet. Die erste Werkstoffschicht 100 wird im Folgenden auch als Metallschicht 100 und die zweite Werkstoffschicht 200 auch als Steinschicht 100 bezeichnet. Die Metallschicht 100 und die Steinschicht 200 sind flächig fest miteinander verbunden, was durch ein Ultraschall-Fügeverfahren oder eine Verklebung erfolgt. Zur Beschichtung 300, Verklebung (Verbindungsschicht 150) oder dem Ultraschall-Fügeverfahren siehe oben.

Die Metallschicht 100 und/oder die Steinschicht 200 können auch noch andere Bestandteile aufweisen, sodass diese Werkstoffschichten 100, 200 im erfindungsgemäßen Verbundwerkstoff 1 selbst wiederum z. B. jeweils einen Durchdringungs-Verbundwerkstoff darstellen. Es ist jedoch bevorzugt, von einem gegenseitigen Verbindungsbereich, z. B. aufgrund eines Ultraschall-Fügeverfahrens, einmal abgesehen, dass die Metallschicht 100 eine Schicht aus einem reinen handelsüblichen Metall und die Steinschicht 200 eine Schicht aus einem reinen handelsüblichen Gestein ist.

Neben der in den Fig. 4 und 5 dargestellten Grundformen kann der erfindungsgemäße Verbundwerkstoff 1 eine Vielzahl von weiteren Ausführungsformen besitzen. Hierbei ist die Abfolge bisher bekannter und anderer Schichten im Verbundwerkstoff 1 nahezu beliebig. Es ist jedoch einerseits bevorzugt, dass die Steinschicht 200 an einer Seite, die nicht unbedingt eine Außenseite sein muss, die Beschichtung 300 aufweist. Andererseits ist es bevorzugt, dass die Steinschicht 200 unmittelbar benachbart zur Metallschicht 100 angeordnet ist.

So zeigt Fig. 6 einen beispielhaften Aufbau einer weiteren Ausführungsform des erfindungsgemäßen Verbundwerkstoffs 1. Gemäß dieser Ausführungsform weist der Verbundwerkstoff 1 mit Bezug auf die Fig. 6 von unten kommend neben der beschichteten ersten Steinschicht 100, der ersten Verbindungsschicht 150 und der ersten Metallschicht 200 zusätzlich eine zweite Verbindungsschicht 150, eine zweite Steinschicht 100, eine dritte Verbindungsschicht 150 und eine zweite Metallschicht 200 auf. Durch die sandwichartige Struktur dieser Ausführungsform wird in vorteilhafter Weise ein Verbundwerkstoff 1 geschaffen, der die bereits erwähnten vorteilhaften Eigenschaften in einem höheren Maße besitzt.

Gemäß der Erfindung kann der Verbundwerkstoff 1 eine beliebige Anzahl von Schichten 100, (150), 200 aufweisen, wobei sich bevorzugt jeweils eine Steinschicht 200 und eine Metallschicht 100 abwechseln und diese Schichten 100, 200 jeweils mit einer Verbindungsschicht 150 verbunden sind. Statt der Verbindungsschicht 150 kann auch eine andere Befestigungsmethode als eine Verklebung, wie z. B. das oben genannte Ultraschall-Fügeverfahren, angewendet werden.

Figur 7 zeigt nun einen beispielhaften Aufbau einer weiteren Ausführungsform des erfindungsgemäßen Verbundwerkstoffs 1, bei welchem eine bisher gelehrte Metallschicht 100 nicht mehr direkt benachbart zur Steinschicht 200 angeordnet ist, sondern mit einem gewissen Abstand dazu. Hierbei befindet sich zwischen der Steinschicht 200 und der Metallschicht 100 eine Metallschaumschicht 400. Die Metallschaumschicht 400 kann vorzugsweise einen Aluminiumschaum aufweisen und auch einstückig mit der Metallschicht 100 gefertigt sein. Hierfür wird ein Teil einer Metallschicht aufgeschäumt, wobei ein nicht aufgeschäumter Abschnitt die Metallschicht 100 bereitstellt und der aufgeschäumte Abschnitt die Metallschaumschicht 400.

Die Metallschaumschicht 400 erhöht die mögliche Energieaufnahme des Verbundwerkstoffs 1 wesentlich, da es durch die schaumartige Gestaltung wie eine Knautschzone wirken kann. Während der Gewichtseinfluss der Metallschaumschicht 400 nicht wesentlich auffällt, kann das erfindungsgemäße Vorsehen der Metallschaumschicht 400 dazu führen, dass die Kerbschlagzähigkeit verbessert ist. Ferner verbessert die Metallschaumschicht 400 die Aufnahme von Querkräften.

Ferner kann der Verbundwerkstoff 1 eine Ringgeflechtschicht (in der Zeichnung nicht dargestellt) aufweisen. Die Ringgeflechtschicht kann vorzugsweise ein Kunststoffgeflecht, beispielsweise aus einem Epoxydharz, welches eine Glasfaserverstärkung aufweisen kann, umfassen. Die Ringgeflechtschicht verstärkt eine Stabilität des Verbundwerkstoffs 1 wesentlich, während der Gewichtseinfluss der Ringgeflechtschicht kaum auffällt.

Ferner kann der Verbundwerkstoff 1 mittels einem Gewebe (ebenfalls in der Zeichnung nicht dargestellt), insbesondere einem Textilgewebe verstärkt werden. Das Gewebe kann dabei in der Verbindungsschicht 150 angeordnet sein. Als Textilgewebe kann beispielsweise ein Twintex^{®} oder ein Gewebe der Art Atlas 1:1 und 1:4 in der Ausprägung mit Carbon-, Glas- und/oder Aramidfasern eingesetzt werden. Eine Gewebeverstärkung kann dadurch erreicht werden, dass das Textilgewebe als Gestricke, Gewirke, Gelege oder Geflecht eingesetzt wird.

In einer Ausführungsform der Erfindung kann in das Gestein, d. h. die Steinschicht 200, eine Flüssigkeit eingesickert sein, um deren mechanische und/oder chemische Eigenschaften zu verändern. Beispielsweise kann durch das Einsickern einer Flüssigkeit erreicht werden, dass das Gestein eine höhere mechanische Festigkeit besitzt. Hierzu kann eine Flüssigkeit mit zwei Komponenten, z. B. aus Bisphenol-A-Epichlorhydrinharz und einer 1,3-Cyclohexandimethanamin-Mischung verwendet werden, um eine Oberflächenvergütung zu erreichen bzw. um die Festigkeit des Gesteins zu erhöhen.

Die Flüssigkeit kann z. B. nach einem Dünnschleifprozess auf die Steinschicht 200 aufgetragen werden. Das Auftragen kann beispielsweise mithilfe einer Zahnspachtel, eines Pinsels oder einem Tuch erfolgen. Beim Auftragen kann die Steinschicht 200 eine über der Raumtemperatur liegende Temperatur aufweisen, die z. B. im Bereich zwischen 40 bis 70°C, insbesondere zwischen 50 und 60°C, liegt, wodurch das Auftragen und das Einsickern unterstützt wird.

Des Weiteren kann das Einsickern einer Flüssigkeit dazu verwendet werden, die Klebeverbindung gegenüber Umwelteinflüssen zu schützen. Dabei wird z. B. die Flüssigkeit auf diejenige Seite der Schicht aufgetragen, auf welcher der Klebstoff aufgetragen wird. Als Flüssigkeit wird z. B. eine wasserabweisende Flüssigkeit verwendet, die vorzugsweise zudem ein Durchsickern einer Flüssigkeit zur Verbindungsschicht 150 verhindert. Auf diese Weise wird eine mit Flüssigkeit angereicherte Sperrschicht (in der Zeichnung nicht dargestellt) in der Steinschicht 200 erreicht.

Bei der Dünnbearbeitung der Steinschicht 200 ist es erforderlich, dass Kühlflüssigkeit für den Schleifvorgang auf die Steinschicht 200 aufgebracht wird. Dabei wird z. B. ein Gemisch aus Wasser und Öl verwendet. Nach der Dünnbearbeitung ist die Steinschicht 200 vollständig zu trocknen, um ein Einsickern der Kühlflüssigkeit zu verhindern. Wird dies nicht erreicht, so besteht die Gefahr, dass die Kühlflüssigkeit die Klebeverbindung angreift und dadurch die Klebekraft nachlassen kann.

Um diesem Problem vorzubeugen, wird, wie oben erläutert, die Steinschicht 200 auf der Klebeseite mit einer Flüssigkeit vor dem Kleben (oder auch vor dem Schleifen) vorbehandelt. Dabei sickert die Flüssigkeit in das Gestein ein und bildet eine Sperrschicht. Nach dem Verkleben der Steinschicht 200 mit der Metallschicht 100 oder einer weiteren Schicht wird die Steinschicht 200 von der freien Seite her abgetragen. Anschließend kann die Beschichtung 300 aufgebracht werden. Es ist auch möglich, diejenige Seite der Steinschicht 200 mit der Sperrschicht zu versehen, auf welcher die Steinschicht 200 dünngeschliffen wird. Hierbei verhindert die Sperrschicht dann ein Eindringen von Kühlflüssigkeit in die Steinschicht 200, natürlich nur solange wie die Sperrschicht auch noch vorhanden ist.

Als Flüssigkeit hierfür kann beispielsweise eine polymerhaltige Flüssigkeit angewendet werden, die direkt vor dem Klebevorgang auf eine gereinigte Seite der Steinschicht 200 aufgetragen wird. Das Auftragen kann mittels Pinsel, Tuch oder maschinell, z. B. bei Raumtemperatur und einem erhöhten Anpressdruck, erfolgen. Eine solche Sperrschicht kann in den verschiedensten Ausführungsformen von Verbundwerkstoffen 1 vorgesehen sein. In Ausführungsformen der Erfindung kann als ein Klebstoff ein Hochtemperatur-Klebstoff eingesetzt werden, der z. B. bis zu einer Temperatur von 550°C und höher seine Klebeeigenschaft beibehält. Somit kann die Temperaturbeständigkeit des Verbundwerkstoffs 1 verbessert werden. Als Klebstoffe können z. B. Keramik-Klebstoffe eingesetzt werden.

Die Herstellung einer erfindungsgemäßen Kraftfahrzeughaube oder eines erfindungsgemäßen Verbundwerkstoffs 1 beginnt durch ein Bereitstellen einer ersten Werkstoffschicht 100, die bevorzugt ein Metall aufweist, ein Bereitstellen einer zweiten Werkstoffschicht 200, die bevorzugt ein Gestein aufweist, und ggf. einem Reinigen der ersten Werkstoffschicht 100 und/oder der zweiten Werkstoffschicht 200 wenigstens in ihren späteren Kontaktbereichen. Im Anschluss daran werden die beiden Werkstoffschichten 100, 200 aneinander flächig festgelegt. Dies kann mittels eines Ultraschall-Fügeverfahrens oder einem Aufbringen von Klebstoff erfolgen.

Findet eine gegenseitige Verklebung der beiden Werkstoffschichten 100, 200 statt, so kann ein Zwei-Komponenten-Kleber, wie SikaFast^{®} 5221, zum Einsatz kommen, wobei auf beide Werkstoffschichten 100, 200 auf ihren später einander zugewandten Seiten Klebstoff appliziert wird. Kommt ein EinKomponenten-Kleber zum Einsatz, so kann dieser an Metallschicht 100 und/oder an Steinschicht 200 aufgetragen werden, wobei es bevorzugt ist, dass in einem Anschluss daran die Metallschicht 100 auf die Steinschicht 200 bewegt wird und sich anschließend die Verklebung ausbildet.

Die Steinschicht 200 kann eine Lage eines Gesteins sein, das in seiner natürlichen Form ausgebildet ist. Hierbei kann die Herstellung ein Dünnschleifen des Gesteins, insbesondere nach dessen Herausarbeiten, z. B. einem Herausschneiden aus einem Block des Gesteins, umfassen, wobei bevorzugt unmittelbar nach dem Dünnschleifen der Weiterverarbeitungsprozess zum erfindungsgemäßen Verbundwerkstoff 1 erfolgen kann. Somit ist in vorteilhafter Weise das Bereitstellen der Steinschicht 200 möglich, da sich die ansonsten nachteilige aufwändige Handhabung dünner Steinplatten erübrigt.

Bevorzugt im Anschluss an das Verbinden der beiden Werkstoffschichten 100, 200 wird die Beschichtung 300 an der Steinschicht 200 vorgesehen. Es ist jedoch möglich, insbesondere bei Anwendung einer Verklebung der beiden Werkstoffschichten 100, 200, die Beschichtung 300 zeitlich vor deren Verklebung an der Steinschicht 200 vorzusehen. Der Verbundwerkstoff 1 erlaubt die Herstellung gekrümmter Flächen, insbesondere durch Pressen, Biegen oder Tiefziehen. Dabei können Krümmungsradien realisiert werden, die im Bereich von 3 mm und größer liegen.

## Patentansprüche

1. Kraftfahrzeughaube, insbesondere Motor- oder Kofferraumhaube für ein Personenkraftfahrzeug, wobei
die Kraftfahrzeughaube (10) einen Verbundwerkstoff (1) mit zwei Werkstoffschichten (100, 200) aufweist, und die erste Werkstoffschicht (100) ein Metall aufweist und die zweite Werkstoffschicht (200) als Gesteinschicht ausgebildet ist, wobei die zweite Werkstoffschicht (200) des Verbundwerkstoffs (1) an einer der ersten Werkstoffschicht (100) gegenüberliegenden Seite eine Filmbeschiehtung (300) aufweist.

2. Verbundwerkstoff, insbesondere für Mantelteile im Kraftfahrzeug- oder Flugzeugbau, mit
wenigstens zwei Werkstoffschichten (100, 200), wobei eine erste Werkstoffschicht (100) ein Metall aufweist und eine zweite Werkstoffschicht (200) als Gesteinschicht ausgebildet ist, und
eine Seitenfläche der ein Gestein aufweisenden Werkstoffschicht (200) eine Filmbeschichtung (300) aufweist.

3. Kraftfahrzeughaube nach Anspruch 1 oder Verbundwerkstoff nach Anspruch 2, wobei die Filmbeschichtung in Form einer PET-Fölie ausgebildet ist, die insbesondere aufgeschrumpft ist.

4. Kraftfahrzeughaube gemäß einem der Anspruche 1 oder 3 oder Verbundwerkstoff gemäß Anspruch 2 oder 3, wobei die Werkstoffschichten (100, 200) durch ein Ultraschall-Fügeverfahren oder mittels einer Verbindungsschicht (150) aneinander festgelegt sind, und
die Beschichtung (300) eine Filmbeschichtung, insbesondere eine PET-Filmbeschichtung, bevorzugt eine aufgeschrumpfte PET-Folie, ist.

5. Kraftfahrzeughaube gemäß einem der Ansprüche 1, 3 oder 4 oder Verbundwerkstoff gemäß einem der Ansprüche 2 bis 4, wobei das Metall Aluminium, Magnesium, Titan, Eisen oder Stahl aufweist, und/oder die Gesteinschicht einen Magenatit, einen Sedimentit oder einen Metamokphit, insbesondere einen Gabbro, einen Granit, einen Quarzit oder ein Basaltgestein aufweist.

6. Kraftfahrzeughaube gemäß einem der Ansprüche 1, 3 bis 5 oder Verbundwerkstoff gemäß einem der Ansprüche 2 bis 5, wobei die Verbindungsschicht (150) einen Klebstoff, bevorzugt einen Acrylharz-Klebstoff oder einen Hochtemperatur-Klebstoff, aufweist.

7. Kraftfahrzeughaube gemäß einem der Ansprüche 1, 3 bis 6 oder Verbundwerkstoff gemäß einem der Ansprüche 3 bis 6, wobei eine Schichtdicke einer ersten Werkstoffschicht (100) geringer als eine Schichtdicke einer zweiten Werkstoffschicht (200) ist.

8. Kraftfahrzeughaube gemäß einem der Ansprüche 1, 3 bis 7 oder Verbundwerkstoff gemäß einem der Ansprüche 3 bis 7, wobei der Verbundwerkstoff (1) eine Mehrzahl von ersten und/oder zweiten Werkstoffschichten (100, 200) und/oder
eine zusätzliche Schicht (400), wie eine Metallschaumschicht, vorzugsweise eine Aluminiumschaumschicht, eine Ringgeflechtschicht, vorzugsweise aus einem Kunststoff, und/oder eine Gewebeschichl, aufweiset

9. Kraftfahrzeughaube gemäß einem der Ansprüche 1, 3 bis 8 oder Verbundwerkstoff nach einem der Ansprüche 3 bis 8, wobei in die zweite Werkstoffschicht (200) eine Flüssigkeit eingesickert ist oder die zweite Werkstoffschicht (200) eine getränkte Schicht ist, die bevorzugt als eine Sperrschicht gegen Flüssigkeiten ausgebildet ist.

10. Verfahren zur Herstellung einer Kraftfahrzeughaube oder eines Verbundwerkstoffs, mit wenigstens zwei Werkstoffschichten (100, 200), wobei
die erste Werkstoffschicht (100) ein Metall aufweist und die zweite Werkstoffschicht (200) als Gesteinschicht ausgebildet ist und beide Werkstoffschichten (100, 200) aneinander festgelegt werden und im Anschluss daran auf eine Seitenfläche der Werkstoffschicht (200) eine Filmbeschichtung (300) aufgebracht wird.

11. Herstellungsverfahren gemäß Anspruch 10, wobei die Kraftfahrzeughaube (10) gemäß einem der Ansprüche 1, 3 bis 9 oder der Verbundwerkstoff (1) gemäß einem der Ansprüche 2 bis 9 aufgebaut wird.

## Claims

1. A vehicle hood, in particular an engine hood or luggage compartment hood for a passenger car, wherein
the vehicle hood (10) comprises a composite material (1) having two layers of material (100, 200), the first layer of material (100) comprising a metal and the second layer of material (200) being configured as layer of rock, wherein the second layer of material (200) of the composite material (1) comprises a film coating (300) on a side that is arranged opposite to the first layer of material (100).

2. A composite material, in particular for shell components in the vehicle or aircraft industry, having
at least two layers of material (100, 200), wherein a first layer of material (100) comprises a metal and a second layer of material (200) is configured as layer of rock, and
a lateral surface of the layer of material (200) comprising rock comprises a film coating (300).

3. The vehicle hood according to claim 1 or the composite material according to claim 2, wherein the film coating is configured in the form of a PET foil that is in particular shrunk.

4. The vehicle hood according to any one of claims 1 or 3 or the composite material according to claim 2 or 3, wherein the layers of material (100, 200) are fixed at each other by means of an ultrasonic joining procedure or by means of a connecting layer (150), and
the coating (300) being a film coating, in particular a PET film coating, in particular a shrunk-on PET foil.

5. The vehicle hood according to any one of claims 1, 3 or 4 or the composite material according to any one of claims 2 to 4, wherein the metal comprises aluminum, magnesium, titanium, iron or steel and/or the layer of rock comprises a magmatite, a sedimentary rock or a metamorphic rock, in particular a gabbro, a granite, a quartzite or a basaltic rock.

6. The vehicle hood according to any one of claims 1, 3 to 5 or the composite material according to any one of claims 2 to 5, wherein the connecting layer (150) comprises an adhesive, preferably an acrylic-resin adhesive or a hightemperature adhesive.

7. The vehicle hood according to any one of claims 1, 3 to 6 or the composite material according to any one of claims 3 to 6, wherein a layer thickness of a first layer of material (100) is smaller than a layer thickness of a second layer of material (200).

8. The vehicle hood according to any one of claims 1, 3 to 7 or the composite material according to any one of claims 3 to 7, wherein the composite material (1) comprises a plurality of first and/or second layers of material (100, 200) and/ or
an additional layer (400) such as a metal foam layer, preferably an aluminum foam layer, a ring mesh layer, preferably made of a plastic material, and/or a textile layer.

9. The vehicle hood according to any one of claims 1, 3 to 8 or the composite material according to any one of claims 3 to 8, wherein a fluid has seeped into the second layer of material (200) or the second layer of material (200) is a drenched layer which is preferably configured as a sealing layer against fluids.

10. A method for producing a vehicle hood or a composite material, having at least two layers of material (100, 200), wherein
the first layer of material (100) comprises a metal and the second layer of material (200) is configured as layer of rock and both layers of material (100, 200) are fixed at each other and subsequently a film coating (300) is applied to a lateral surface of the layer of material (200).

11. The production method according to claim 10, wherein the vehicle hood (10) is configured according to any one of claims 1, 3 to 9 or the composite material (1) is configured according to any one of claims 2 to 9.

## Revendications

1. Capot de véhicule automobile, en particulier capot de compartiment moteur ou de coffre à bagages pour une voiture de tourisme, dans lequel le capot de véhicule automobile (10) comprend un matériau composite (1) avec deux couches de matériau (100, 200), et la première couche de matériau (100) comprend un métal et la deuxième couche de matériau (200) est réalisée comme une couche de roche, dans lequel la deuxième couche de matériau (200) du matériau composite (1) présente un revêtement en film (300) sur un côté situé à l'opposé de la première couche de matériau (100).

2. Matériau composite, en particulier pour des parties d'enveloppe en construction automobile ou en construction aéronautique, avec au moins deux couches de matériau (100, 200), dans lequel une première couche de matériau (100) comprend un métal et une deuxième couche de matériau (200) est réalisée comme une couche de roche, et une face latérale de la couche de matériau (200) comportant une roche présente un revêtement en film (300).

3. Capot de véhicule automobile selon la revendication 1 ou matériau composite selon la revendication 2, dans lequel le revêtement en film est réalisé sous la forme d'une feuille de PET, qui est en particulier rétractée.

4. Capot de véhicule automobile selon l'une des revendications 1 ou 3, ou matériau composite selon la revendication 2 ou 3, dans lequel les couches de matériau (100, 200) sont attachées l'une à l'autre par un procédé d'assemblage aux ultrasons ou au moyen d'une couche de liaison (150), et le revêtement (300) est un revêtement en film, en particulier un revêtement en film de PET, de préférence une feuille de PET rétractée.

5. Capot de véhicule automobile selon l'une quelconque des revendications 1, 3 ou 4 ou matériau composite selon l'une quelconque des revendications 2 à 4, dans lequel le métal comprend l'aluminium, le magnésium, le titane, le fer ou l'acier, et/ou la couche de roche comprend une roche magmatique, sédimentaire ou métamorphique, en particulier un gabbro, un granit, une quartzite ou une roche basaltique.

6. Capot de véhicule automobile selon l'une quelconque des revendications 1, 3 à 5 ou matériau composite selon l'une quelconque des revendications 2 à 5, dans lequel la couche de liaison (150) comprend une colle, de préférence une colle de résine acrylique ou une colle pour haute température.

7. Capot de véhicule automobile selon l'une quelconque des revendications 1, 3 à 6 ou matériau composite selon l'une quelconque des revendications 3 à 6, dans lequel une épaisseur de couche d'une première couche de matériau (100) est inférieure à une épaisseur de couche d'une deuxième couche de matériau (200).

8. Capot de véhicule automobile selon l'une quelconque des revendications 1, 3 à 7 ou matériau composite selon l'une quelconque des revendications 3 à 7, dans lequel le matériau composite (1) présente une pluralité de premières et/ou de deuxièmes couches de matériau (100, 200) et/ou une couche supplémentaire (400), comme une couche de mousse métallique, de préférence une couche de mousse d'aluminium, une couche de treillis annulaire, de préférence en une matière plastique, et/ou une couche de tissu.

9. Capot de véhicule automobile selon l'une quelconque des revendications 1, 3 à 8 ou matériau composite selon l'une quelconque des revendications 3 à 8, dans lequel un liquide est infiltré dans la deuxième couche de matériau (200) ou la deuxième couche de matériau (200) est une couche imprégnée (100), qui est réalisée de préférence comme une couche d'arrêt contre des liquides.

10. Procédé de fabrication d'un capot de véhicule automobile ou d'un matériau composite, avec au moins deux couches de matériau (100, 200), dans lequel la première couche de matériau (100) comprend un métal et la deuxième couche de matériau (200) est réalisée comme une couche de roche et les deux couches de matériau (100, 200) sont attachées l'une à l'autre et par la suite un revêtement en film (300) est appliqué sur une face latérale de la couche de matériau (200).

11. Procédé de fabrication selon la revendication 10, dans lequel le capot de véhicule automobile (10) est construit selon l'une quelconque des revendications 1, 3 à 9 ou le matériau composite (1) est constitué selon l'une quelconque des revendications 2 à 9.
